# EUROPEAN PATENT APPLICATION

(11) **EP 3 432 408 A1**
(43) Date of publication of application: **23.01.2019**
(21) Application number: 17182013.7
(22) Date of filing: 19.07.2017
(51) Int. Cl.: H01M 10/42, H01M 10/44, H01M 2/34, H01M 10/48

(54) **BATTERY CELL AND METHOD FOR PRODUCING A BATTERY CELL**

(71) Applicant: Lithium Energy and Power GmbH & Co. KG, 70469 Stuttgart (DE)
(72) Inventor: Lorenz, Enno, 70469 Stuttgart-Feuerbach (DE); Droigk, Thorsten, 71640 Ludwigsburg (DE)
(74) Representative: Isarpatent

(57) **Abstract**

The invention relates to a battery cell (2), comprising a negative terminal (15), a positive terminal (16) and a fast discharging device (70), whereat the fast discharging device (70) comprises a first busbar (71) that is electrically connected to the negative terminal (15), a second busbar (72) that is electrically connected to the positive terminal (16) and an activation unit (75) that is connected to the first busbar (71) and to the second busbar (72). At least one connection element (91, 92) is arranged between at least one busbar (71, 72) and at least one terminal (15, 16), whereat the connection element (91, 92) is electrically conductive and a melting temperature of the connection element (91, 92) is lower than a melting temperature of the busbar (71, 72) and lower than a melting temperature of the terminal (15, 16). The invention also relates to a method for producing a corresponding battery cell (2).

## Description

The invention relates to a battery cell that comprises a negative terminal, a positive terminal and a fast discharging device, whereat the fast discharging device comprises a first busbar that is electrically connected to the negative terminal, a second busbar that is electrically connected to the positive terminal and an activation unit that is connected to the first busbar and to the second busbar. The invention also relates to a method for producing a corresponding battery cell.

### State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel. Thereat, a battery cell comprises a positive terminal and a negative terminal, whereat the battery cell can be charged and discharged via the terminals.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

An electrode assembly has a positive electrode called cathode and a negative electrode called anode. The anode and the cathode are separated from one another by means of a separator. The electrodes of the electrode assembly can be formed like foils and wound with interposition of the separator to form an electrode roll, also referred to as jelly-roll. Alternatively, the electrodes of the electrode assembly can be layered with interposition of the separator to form an electrode stack.

In case of error, a battery cell can be discharged to avoid critical situations. To this end, fast discharging devices are known. Such a fast discharging device, also called safety relay, is a bypass element that is connected to the terminals of the battery cell. In normal operation of the battery cell, the safety relay is in off-state and insulates the terminals of the battery cell electrically. In case of error, the safety relay is activated and gets into on-state. Then the safety relay joins the terminals of the battery cell electrically. Hence, a discharging current is flowing through the safety relay and the battery cell is discharged.

Document DE 10 2012 005 979 B4 discloses a bypass element for bypassing a battery cell of an electric energy storage. The bypass element comprises two current collectors and a safety stack arranged in between. The safety stack comprises two solder layers that are arranged each facing one current collector, two insulation layers arranged between the solder layers and a reactive layer arranged between the insulation layers. When the reactive layer is activated, an exothermic reaction takes place and the insulation layers are disintegrated. Thus, the electric conductive solder layers are getting in contact with one another and hence, the current collectors are joined electrically.

Document US 2013/0189560 A1 discloses a battery cell with a battery cell terminal including a terminal substrate, an interconnector busbar including a busbar substrate, and a coating disposed between and contacting at least one of the terminal and busbar substrates. Thereat, the coating includes a metal and has a melting temperature smaller than a melting temperature of the terminal or busbar substrate.

Document US 2009/159354 A1 discloses a battery system having interconnected battery packs. Each battery pack includes a plurality of rectangular prismatic shaped cells. Each cell includes a positive terminal at one end and a negative terminal at the other end. The cells are electrically connected in series whereat terminals of adjacent cells are interconnected with one another using an electrically conductive bridge connector. Solder having a lower melting point than the metal of the connector and the terminal is disposed at the junction between the connector and the terminal. The connection between the connector and the terminal may be formed through solder welding.

### Disclosure of the Invention

A battery cell is proposed which comprises a negative terminal, a positive terminal and a fast discharging device. Thereat, the fast discharging device comprises a first busbar that is electrically connected to the negative terminal, a second busbar that is electrically connected to the positive terminal and an activation unit that is connected to the first busbar and connected to the second busbar.

According to the invention, at least one connection element is arranged between at least one busbar of the fast discharging device and at least one terminal, whereat the at least one connection element is electrically conductive. Thereat, a melting temperature of the connection element is lower than a melting temperature of the busbar. The melting temperature of the connection element is also lower than a melting temperature of the terminal. In particular, a first connection element is arranged between the first busbar and the negative terminal, and a second connection element is arranged between the second busbar and the positive terminal.

According to a preferred embodiment of the invention, the battery cell comprises a housing forming one of the terminals. The other terminal of the battery cell protrudes from the housing. Thereat, the other terminal that protrudes from the housing is electrically insulated from the housing. If the housing forms the negative terminal then the positive terminal protrudes from the housing. If the housing forms the positive terminal then the negative terminal protrudes from the housing.

Preferably, the terminals have flat contact surfaces that are arranged parallel offset in respect to one another. In particular, the contact surface of one of the terminal aligns with a plain of the housing of the battery cell, and the contact surface of the other terminal projects from said plane of the housing of the battery cell.

Preferably, the negative terminal has a negative contact surface and the first connection element is placed on the negative contact surface. Also, the positive terminal has a positive contact surface and the second connection element is placed on the positive contact surface.

According to a preferred embodiment of the invention, the busbars of the fast discharging device extend from the activation unit in opposite directions. Thereat, the activation unit is placed between the first busbar and the second busbar and is mechanically fixed to the first busbar and mechanically fixed to the second busbar.

Preferably, the busbars of the fast discharging device have flat contact areas that are arranged parallel offset in respect to one another. Preferably, the first busbar has a first contact area, and the first connection element is placed on the first contact area. Also, the second busbar has a second contact area, and the second connection element is placed on the second contact area.

Also other arrangements are possible. For example, the busbars can be arranged perpendicular to the terminals.

According to an advantageous development of the invention, the first busbar overlaps the negative terminal in a first contact zone. Thereat, the first connection element which is arranged between the first busbar and the negative terminal extends over the entire first contact zone. Also, the second busbar overlaps the positive terminal in a second contact zone. Alternatively or additionally, the second connection element which is arranged between the second busbar and the positive terminal extends over the entire second contact zone.

In particular, the first contact zone is located between the negative contact surface of the negative terminal and the first contact area of the first busbar. Also, the second contact zone is located between the positive contact surface of the positive terminal and the second contact area of the second busbar.

According to an advantageous embodiment of the invention, the at least one connection element is made of a metallic alloy and hence is electrically conductive. In particular, the first connection element and the second connection element are made of the same metallic alloy.

For example, the at least one connection element is made of an alloy containing zinc (Zn) and aluminium (Al). Such a connection element for example has a melting temperature between 400 °C and 500 °C. In particular, a hard solder is useable having a melting temperature below the melting temperature of the busbars and below the melting temperature of the terminals. If the terminals and the busbars are made of aluminium (Al), the in particular hard solders like L-ZnAl30, L-AlSi12, L-SnZn10, L-SnZn40, L-CdZn20, L-ZnAl15 are feasible. The melting temperatures of said hard solders are between 450 °C and 600 °C which is below the melting temperature of aluminium which is about 660 °C. If the terminals and the busbars are made of copper (Cu), also higher melting temperatures are feasible.

Furthermore, a method for producing a battery cell comprising a negative terminal, a positive terminal and a fast discharging device is proposed. Thereat, the fast discharging device comprises a first busbar, a second busbar and an activation unit that is connected to the first busbar and connected to the second busbar.

According to the method, at least one connection element is arranged between at least one of the busbars and at least one of the terminals, whereat the at least one connection element is electrically conductive. Thereat, a melting temperature of the connection element is lower than a melting temperature of the busbar. The melting temperature of the connection element is also lower than a melting temperature of the terminal.

In a following step, the first busbar is electrically connected to the negative terminal by heating a first connection element which is arranged between the first busbar and the negative terminal to a temperature which is higher than the melting temperature of the first connection element but lower that the melting temperature of the first busbar and lower than the melting temperature of the negative terminal.

Also, the second busbar is electrically connected to the positive terminal by heating a second connection element which is arranged between the second busbar and the positive terminal to a temperature which is higher than the melting temperature of the second connection element but lower that the melting temperature of the second busbar and lower than the melting temperature of the positive terminal.

According to an advantageous embodiment of the invention, the first connection element is heated by laser soldering to the temperature higher than the melting temperature of the first connection element. Also, the second connection element is heated by laser soldering to the temperature higher than the melting temperature of the second connection element.

According to another advantageous embodiment of the invention, the first connection element is heated by resistance brazing to the temperature higher than the melting temperature of the first connection element. Also, the second connection element is heated by resistance brazing to the temperature higher than the melting temperature of the second connection element.

According to an advantageous development of the invention, the first busbar is pressed against the negative terminal while the first connection element is heated to the temperature higher than the melting temperature of the first connection element. Also, the second busbar is pressed against the positive terminal while the second connection element is heated to the temperature higher than the melting temperature of the second connection element.

Preferably, the terminals have flat contact surfaces that are arranged parallel offset in respect to one another, and the busbars have flat contact areas that are arranged parallel offset in respect to one another. Thereat, the contact areas of the busbars are pressed against the contact surfaces of the terminals while the connection elements are heated to the temperature higher than their melting temperature.

According to a preferred embodiment of the invention, the first connection element is in solid state when the first connection element is arranged between the first busbar and the negative terminal. Also, the second connection element is in solid state when the second connection element is arranged between the second busbar and the positive terminal.

Advantageously, the first connection element is heated until the first connection element is getting into molten state after being arranged between the first busbar and the negative terminal. Also, the second connection element is heated until the second connection element is getting into molten state after being arranged between the second busbar and the positive terminal. Thereat, the busbars of the fast discharging device and the terminals remain in solid state while the connection elements are heated.

A battery cell according to the invention is useable advantageously in particular in an electric vehicle (EV), in a hybrid electric vehicle (HEV), in a plug-in hybrid vehicle (PH EV) or in a stationary application. But also other applications are feasible.

### Advantages of the Invention

A battery cell according to the invention has a very low external ohmic resistance when the fast discharging device is in on-state. In particular, the contact resistances between the terminals and the busbars of the fast discharging device are relatively low when the connection elements extend over the entire contact zones. Hence, the battery cell can be discharged with a relatively high discharging current and internal heat in the electrode assembly is decreased in case of internal shortcut. Hence, thermal runaway and explosion of the battery can be avoided and the hazard level is reduced.

The method for producing a battery cell according to the invention allows connecting the busbars of the fast discharging device to the terminals at relative low temperature compared to a welding process. Hence, the amount of energy that is introduced into the activation unit of the fast discharging device is reduced. Thus, the risk of causing a reaction of the activation layer within the activation unit of the fast discharging device is also reduced. Such a reaction of the activation layer would cause the solder which is included in the activation unit to melt and to cause a short circuit. Hence, the risk of activating the fast discharging device during production of the battery cell is reduced.

Furthermore, component tolerances can be compensated. In particular, tolerances of the busbars as well as of the terminals in vertical direction can be compensated. When the connection elements are melting, the connection elements spread over the entire contact zones and the extension of the connection elements in vertical direction is adapted to the respective dimensions of the busbars and of the terminals.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view of a battery module with several battery cells,
- Figure 2: a perspective view of a battery cell,
- Figure 3: a sectional view of a battery cell in a first stage of production and
- Figure 4: a sectional view of a battery cell in a second stage of production.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

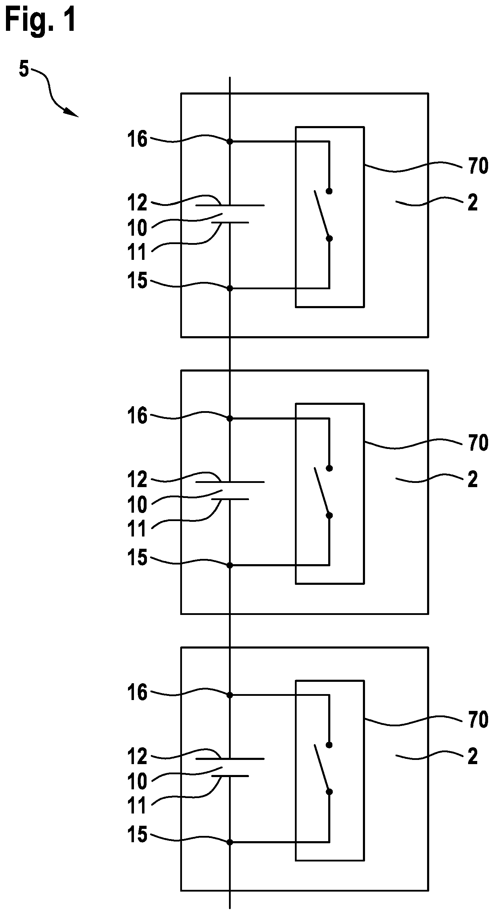

Figure 1 shows schematic view of a battery module 5 with several battery cells 2. The battery cells 2 are connected in series. Every battery cell 2 comprises an electrode assembly 10, which contains an anode 11 und a cathode 12. Thereat, the anode 11 of the electrode assembly 10 is connected to a negative terminal 15. The cathode 12 of the electrode assembly 10 is connected to a positive terminal 16. For serial connection of the battery module 5, the negative terminal 15 of each battery cell 2 is connected to the positive terminal 16 of the adjacent battery cell 2.

Every battery cell 2 further comprises a fast discharging device 70. The fast discharging device 70 is electrically connected to the negative terminal 15 and to the positive terminal 16. In the presentation shown here, the fast discharging device 70 is in off-state. That means the negative terminal 15 and the positive terminal 16 of the battery cell 2 are not connected electrically by dint of the fast discharging device 70.

In case of an internal error within the electrode assembly 10, the fast discharging device 70 can be activated. After activation, the fast discharging device 70 gets into on-state. Thereat, the fast discharging device 70 causes a short circuit between the negative terminal 15 and the positive terminal 16. Hence, a discharging current is flowing through the fast discharging device 70 and the electrode assembly 10 of the battery cell 2 is discharged. The defective battery cell 2 then represents an electrical short circuit and hence, the other battery cells 2 of the battery module 5 are still connected in series. Thus, the battery module 5 is still operable.

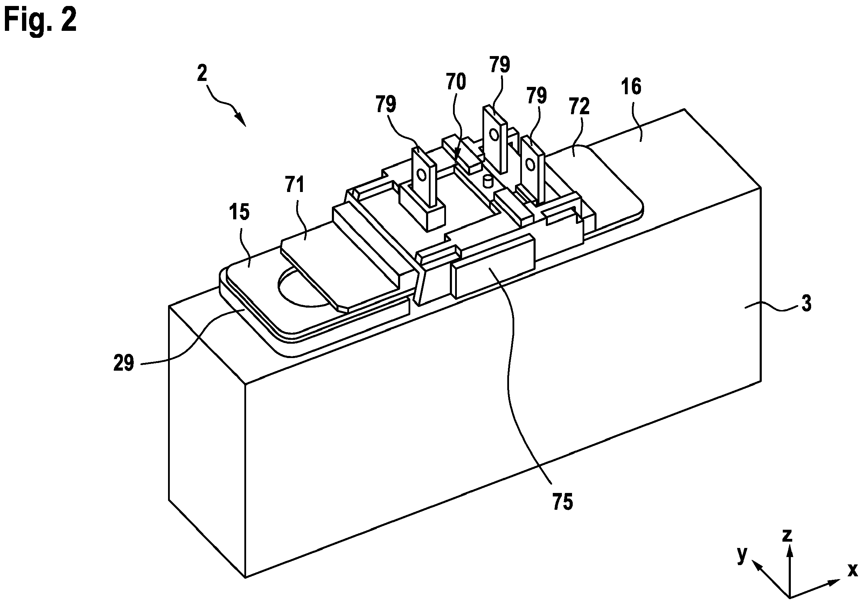

Figure 2 shows a perspective view of a battery cell 2. The electrode assembly 10 is arranged inside a housing 3 of the battery cell 2 and hence is hidden by the housing 3. The housing 3 is made of a metallic material and forms the positive terminal 16. The negative terminal 15 protrudes from the housing 3 in a vertical direction z. The negative terminal 15 is electrically insulated from the housing 3 by dint of an insulator 29.

The fast discharging device 70 comprises a first busbar 71 that is electrically and mechanically connected to the negative terminal 15 and a second busbar 72 that is electrically and mechanically connected to the positive terminal 16. The fast discharging device 70 further comprises an activation unit 75 that is connected to the first busbar 71 and to the second busbar 72. The fast discharging device 70 further comprises three contact pins 79 for electrical connection of the fast discharging device 70 to a control unit.

The activation unit 75 of the fast discharging device 70 is placed between the first busbar 71 and the second busbar 72 and is mechanically fixed to the first busbar 71 and to the second busbar 72. The busbars 71, 72 extend from the activation unit 75 in a longitudinal direction x which is orientated perpendicular to the vertical direction z. However, the busbars 71, 72 extend from the activation unit 75 in opposite directions. A direction which is orientated perpendicular to the longitudinal direction x and to the vertical direction z is referred to as a transverse direction y.

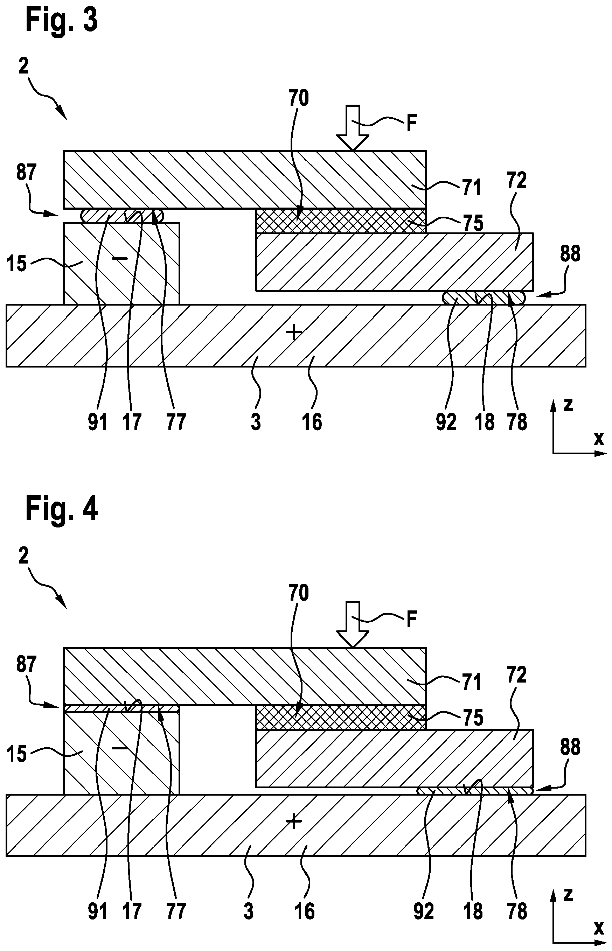

Figure 3 shows a sectional view of a battery cell 2 in a first stage of production. The negative terminal 15 has a flat negative contact surface 17 extending in longitudinal direction x and in transverse direction y. The positive terminal 16 has a flat positive contact surface 18 extending in longitudinal direction x and in transverse direction y. The negative contact surface 17 and the positive contact surface 18 are arranged parallel offset in respect to one another in vertical direction z.

The first busbar 71 of the fast discharging device 70 has a flat first contact area 77 extending in longitudinal direction x and in transverse direction y. The second busbar 72 of the fast discharging device 70 has a flat second contact area 78 extending in longitudinal direction x and in transverse direction y. The first contact area 77 and the second contact area 78 are arranged parallel offset in respect to one another in vertical direction z.

The first busbar 71 overlaps the negative terminal 15 in a first contact zone 87. Thereat, the first contact zone 87 is located between the negative contact surface 17 of the negative terminal 15 and the first contact area 77 of the first busbar 71. The first contact zone 87 extends over the whole surface area of the negative terminal 15.

The second busbar 72 overlaps the positive terminal 16 in a second contact zone 88. Thereat, the second contact zone 88 is located between the positive contact surface 18 of the positive terminal 16 and the second contact area 78 of the second busbar 72. The second contact zone 88 extends over a surface area which corresponds to a surface area of the negative terminal 15.

A first connection element 91 is arranged between the first busbar 71 and the negative terminal 15. In particular, the first connection element 91 is placed on the negative contact surface 17 of the negative terminal 15 and on the first contact area 77 of the first busbar 71. Hence, the first connection element 91 is placed within the first contact zone 87. In the first stage of production shown here, the first connection element 91 that is made of a metallic alloy is in solid state.

A second connection element 92 is arranged between the second busbar 72 and the positive terminal 16. In particular, the second connection element 92 is placed on the positive contact surface 18 of the positive terminal 16 and on the second contact area 78 of the second busbar 72. Hence, the second connection element 92 is placed within the second contact zone 88. In the first stage of production shown here, the second connection element 92 that is made of a metallic alloy is in solid state.

A force F is applied to the fast discharging device 70 pressing the first busbar 71 against the first connection element 91 and against the negative terminal 15. The force F is also pressing the second busbar 72 against the second connection element 92 and against the positive terminal 16. Thereat, the force F is applied in vertical direction z.

Subsequently, the first busbar 71 is electrically and mechanically connected to the negative terminal 15 by heating the first connection element 91 to a temperature which is higher than the melting temperature of the first connection element 91 but lower that the melting temperature of the first busbar 71 and lower than the melting temperature of the negative terminal 15. Hence, the first connection element 91 is heated until the first connection element 91 is getting into molten state. Thus, the first busbar 71 is soldered to the negative terminal 15. However, the first busbar 71 and the negative terminal 15 remain in solid state.

Also, the second busbar 72 is electrically and mechanically connected to the positive terminal 16 by heating the second connection element 92 to a temperature which is higher than the melting temperature of the second connection element 92 but lower than the melting temperature of the second busbar 72 and lower than the melting temperature of the positive terminal 16. Hence, the second connection element 92 is heated until the second connection element 92 is getting into molten state. Thus, the second busbar 72 is soldered to the positive terminal 16. However, the second busbar 72 and the positive terminal 16 remain in solid state.

The force F is still applied to the fast discharging device 70 while the first connection element 91 and the second connection element 92 are heated. Hence, the force F is still applied to the fast discharging device 70 while the first connection element 91 and the second connection element 92 are getting into molten state.

Thus, the first busbar 71 of the fast discharging device 70 is still pressed against the negative terminal 15 while the first connection element 91 is heated and is getting into molten state. In particular, the first contact area 77 of the first busbar 71 is pressed against the negative contact surface 17 of the negative terminal 15. Hence, the molten first connection element 91 is squeezed and is spread within the first contact zone 87.

Also, the second busbar 72 of the fast discharging device 70 is still pressed against the positive terminal 16 while the second connection element 92 is heated and is getting into molten state. In particular, the second contact area 78 of the second busbar 72 is pressed against the positive contact surface 18 of the positive terminal 16. Hence, the molten second connection element 92 is squeezed and is spread within the second contact zone 88.

Figure 4 shows a sectional view of a battery cell 2 in a second stage of production. The first connection element 91 that is spread within the first contact zone 87 has cooled down and is again in solid state. Also, the second connection element 92 that is spread within the second contact zone 88 has cooled down and is again in solid state.

Thereat, the first connection element 91 is spread such that the first connection element 91 extends over the entire first contact zone 87 in which the first busbar 71 overlaps the negative terminal 15. In particular, the first connection element 91 extends in transverse direction y over the entire first contact zone 87. The first connection element 91 also extends in longitudinal direction x over the entire first contact zone 87.

The second connection element 92 is spread such that the second connection element 92 extends almost over the entire second contact zone 88. In particular, the second connection element 92 extends in transverse direction y over the entire second contact zone 88. The second connection element 92 extends in longitudinal direction x only partly over the second contact zone 88.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery cell (2), comprising
a negative terminal (15), a positive terminal (16) and
a fast discharging device (70), whereat
the fast discharging device (70) comprises
a first busbar (71) that is electrically connected to the negative terminal (15),
a second busbar (72) that is electrically connected to the positive terminal (16) and
an activation unit (75) that is connected to the first busbar (71) and to the second busbar (72),
**characterized in that**
at least one connection element (91, 92) is arranged between
at least one busbar (71, 72) and at least one terminal (15, 16), whereat the connection element (91, 92) is electrically conductive and
a melting temperature of the connection element (91, 92) is lower than
a melting temperature of the busbar (71, 72) and lower than
a melting temperature of the terminal (15, 16).

2. Battery cell (2) according to claim 1, **characterized in that**
the battery cell (2) comprises a housing (3) forming one of the terminals (15, 16) and **in that**
the other terminal (15, 16) protrudes from the housing (3).

3. Battery cell (2) according to one of the preceding claims, **characterized in that**
the terminals (15, 16) have flat contact surfaces (17, 18)
that are arranged parallel offset in respect to one another.

4. Battery cell (2) according to one of the preceding claims, **characterized in that**
the busbars (71, 72) extend from the activation unit (75) in opposite directions.

5. Battery cell (2) according to one of the preceding claims, **characterized in that**
the busbars (71, 72) have flat contact areas (77, 78)
that are arranged parallel offset in respect to one another.

6. Battery cell (2) according to one of the preceding claims, **characterized in that**
the first busbar (71) overlaps the negative terminal (15) in a first contact zone (87), and a first connection element (91) arranged between the first busbar (71) and the negative terminal (15) extends over the entire first contact zone (87), and/or
the second busbar (72) overlaps the positive terminal (16) in a second contact zone (88), and a second connection element (92) arranged between the second busbar (72) and the positive terminal (16) extends over the entire second contact zone (88).

7. Battery cell (2) according to one of the preceding claims, **characterized in that**
the at least one connection element (91, 92) is made of a metallic alloy.

8. Method for producing a battery cell (2) comprising
a negative terminal (15), a positive terminal (16) and
a fast discharging device (70), whereat
the fast discharging device (70) comprises
a first busbar (71), a second busbar (72) and
an activation unit (75) that is connected to the first busbar (71) and to the second busbar (72), the method comprising the following steps:
- arranging at least one connection element (91, 92) between at least one busbar (71, 72) and at least one terminal (15, 16), whereat the connection element (91, 92) is electrically conductive and a melting temperature of the connection element (91, 92) is lower than a melting temperature of the busbar (71, 72) and lower than a melting temperature of the terminal (15, 16);
- electrically connecting the first busbar (71) to the negative terminal (15) by heating a first connection element (91) arranged between the first busbar (71) and the negative terminal (15) to a temperature higher than the melting temperature of the first connection element (91) but lower that the melting temperature of the first busbar (71) and lower than the melting temperature of the negative terminal (15), and/or
- electrically connecting the second busbar (72) to the positive terminal (16) by heating a second connection element (92) arranged between the second busbar (72) and the positive terminal (16) to a temperature higher than the melting temperature of the second connection element (92) but lower that the melting temperature of the second busbar (72) and lower than the melting temperature of the positive terminal (16).

9. Method according to claim 8, whereat
the first connection element (91) is heated by laser soldering and/or
the second connection element (92) is heated by laser soldering.

10. Method according to claim 8, whereat
the first connection element (91) is heated by resistance brazing and/or
the second connection element (92) is heated by resistance brazing.

11. Method according to one of claims 8 to 10, whereat
the first busbar (71) is pressed against the negative terminal (15) while
the first connection element (91) is heated, and/or
the second busbar (72) is pressed against the positive terminal (16) while the second connection element (92) is heated.

12. Method according to claim 11, whereat
the terminals (15, 16) have flat contact surfaces (17, 18)
that are arranged parallel offset in respect to one another, and
the busbars (71, 72) have flat contact areas (77, 78)
that are arranged parallel offset in respect to one another, and whereat
the contact areas (77, 78) are pressed against the contact surfaces (17, 18) while the connection elements (91, 92) are heated.

13. Method according to one of claims 8 to 12, whereat
the first connection element (91) is in solid state when arranged between
the first busbar (71) and the negative terminal (15), and/or
the second connection element (92) is in solid state when arranged between the second busbar (72) and the positive terminal (16).

14. Method according to claim 13, whereat
the first connection element (91) is heated until getting into molten state after being arranged between the first busbar (71) and the negative terminal (15), and/or
the second connection element (92) is heated until getting into molten state after being arranged between the second busbar (72) and the positive terminal (16).

15. Usage of a battery cell (2) according to one of claims 1 to 7
in an electric vehicle (EV), in a hybrid electric vehicle (HEV), in a plug-in hybrid vehicle (PHEV) or in a stationary application.
